# EUROPEAN PATENT SPECIFICATION

(11) **EP 4 167 764 B1**
(45) Date of publication and mention of the grant of the patent: **14.08.2024**
(21) Application number: 20745349.9
(22) Date of filing: 23.06.2020
(51) Int. Cl.: A23L 13/60, A23B 4/18, A23B 4/20, A23L 3/349, A23L 3/3499, A23L 3/3508

(54) **COMPOSITION FOR PRESERVING AND/OR IMPROVING THE QUALITY OF MEAT PRODUCTS**
ZUSAMMENSETZUNG ZUR KONSERVIERUNG UND/ODER VERBESSERUNG DER QUALITÄT VON FLEISCHPRODUKTEN
COMPOSITION POUR CONSERVER OU AMÉLIORER LA QUALITÉ DE PRODUITS CARNÉS

(43) Date of publication of application: 26.04.2023
(73) Proprietor: Purac Biochem B.V., 4206 AC Gorinchem (NL)
(72) Inventor: MCCOY, Garrett, Douglas, Lenexa, KS 66214 (US); KUMAR, Saurabh, Lenexa, KS 66214 (US); KARLEEN, Saffiera, 4206 AC Gorinchem (NL); WIJMAN, Johanna, Gerarda Elisabeth, 4206 AC Gorinchem (NL); HILHORST, Gerrit, Anthon Rene, 4206 AC Gorinchem (NL)
(74) Representative: Nederlandsch Octrooibureau
(86) International application number: PCT/US2020/039037
(87) International publication number: WO 2021/262144

(56) References cited:
- EP-A1- 3 170 403
- WO-A2-2012/028928
- CN-A- 105 433 265
- CN-A- 108 719 835
- DATABASE WPI Week 201879, Derwent World Patents Index; AN 2018-87392U
- DATABASE WPI Week 201652, Derwent World Patents Index; AN 2016-230949
- ANONYMOUS: "Beefsteak Tatar mit Kapernsauce", 3 November 2018 (2018-11-03), Essen, Germany, pages 1 - 1, XP055782807, Retrieved from the Internet <URL:https://www.genusswelt.de/10066-Wurst-Schinken/10120-Brotaufstriche/11649-Beefsteak-Tatar-mit-Kapernsauce.html> [retrieved on 20210308]

## Description

### TECHNICAL FIELD OF THE INVENTION

The invention relates to compositions for preserving and/or improving the quality of meat products or meat analogues comprising (i) lactate and acetate in a molar ratio of lactic acid equivalent: acetic acid equivalent of 0.5:1 to 1.7:1; and (ii) anthocyanidin. The invention further relates to a method for the preparation of these compositions and a process of preparing meat products.

### BACKGROUND OF THE INVENTION

It is known to subject meat products such as fresh meat and processed meat to treatments in order to improve its taste and/or to extend its shelf life. Examples of such treatments include e.g. salting, curing, fermentation and smoking. Examples of processed meat products are bacon, ham, sausages, salami, corned beef, beef jerky, canned meat and meat-based sauces.

In order to attain meat products or meat analogues with the desired properties, various additional ingredients are commonly used. These additives may contribute to the shelf life, both microbiologically and chemically, the texture, flavor and color of the product and to the yield of the method of preparation. Conventional additives are e.g. salts, phosphates, benzoates, acids, nitrate or nitrite (from chemical sources), caseinate. Such additives may be disliked by consumers because they are perceived as "chemical" or "artificial" or the like. There is a need for additives that are perceived as more "natural" or "responsible" or "recognizable".

As an alternative for the use of these "chemical" additives, the use of more attractive, "label friendly" additives is often hampered due to the complex multi-functionality of the former additives. Phosphates, for instance, are known to affect not only the pH stability but also the protein extraction from the meat, the water-holding capacity and the hydration of the meat. Nitrate and nitrite are known to affect not only the color and the flavor of the meat but also have an antimicrobial effect. Since generally there also is a complex interplay between the different additives in their effects, it has turned out to be difficult to find alternatives for conventional "chemical" additives.

US 2005/02872841 describes processed meat comprising a dietary fiber gel and at least one functional food selected from a group consisting of high omega three oil, medium chain triglyceride, fagopyritrol, lycopene, polyphenolic antioxidants of vegetable origin, luteine, beta carotene, calcium stearate, vitamin E, bioflavonoid.

EP-A 3 106 041 describes meat treatment compositions comprising one or more acetic acid salts and one or more polysaccharide materials which are particularly effective in reducing moisture loss during cooking of meat. Since in some embodiments of these compositions, the ingredients can be based on natural vinegar and plant derived fiber materials, these compositions may also be attractive from the perspective of "label friendly" additives.

WO 2018/106109 describes a meat treatment composition comprising a combination of a buffered food acid component in the form of partially or completely neutralized acetic acid and a nitrite source in the form of a cultured vegetable extract. EP 3 170 403 A1 discloses a preservative composition for use in sausages comprising as main ingredient an organic acid component consisting of acetate and lactate (49.5% sodium lactate and 49.5% sodium acetate on a dry matter basis), potassium cinnamate and vanillin.

It is the objective of the invention to provide additive compositions for meat products and meat analogues that have multiple functionalities and that are considered more attractive to consumers than conventional additives.

### SUMMARY OF THE INVENTION

The inventors have developed a composition for preserving and/or improving the quality of meat products and meat analogues. This composition provides multiple functionalities and can be prepared from "label friendly" ingredients.

The present composition for preserving or improving the quality of meat products and meat analogues comprises on a dry matter basis:
(a) between 30 and 80 % (w/w) acid equivalent of lactate and acetate;
(b) between 0.04 and 2.5% (w/w) of anthocyanidin;
wherein lactate and acetate are contained in the composition in a molar ratio of lactic acid equivalent: acetic acid equivalent of 0.5:1 to 1.7:1.

It was found that this combination of ingredients can suitably replace conventional preservatives, stabilizers, acid regulators and anti-oxidants. When applied in meat products or meat analogues the present composition provides color stability and effective prevention against outgrowth of pathogenic micro-organisms such as *Clostridium botulinum* and *Listeria monocytogenes.*

The invention also relates to a method for the preparation of a composition for preserving and/or improving the quality of meat products and meat analogues, the method comprising
- providing a vinegar product containing on a dry weight basis at least 30% (w/w) of acetic acid equivalent, wherein the acetate is selected from sodium acetate, potassium acetate, calcium acetate, acetic acid and combinations thereof;
- providing a lactic acid fermentation product containing on a dry weight basis at least 30 % (w/w) of lactic acid equivalent, wherein the lactate is selected from sodium lactate, potassium lactate, calcium lactate, lactic acid and combinations thereof;
- providing a source of anthocyanidin containing on a dry weight basis at least 0.1 % (w/w) of anthocyanidin;
- mixing the vinegar product, the lactic acid fermentation product and the source of anthocyanidin.

The invention also relates to a process of preparing meat products or meat analogues, said process comprising adding the composition according to the invention in an amount of between 0.5 and 15% (w/w) dry matter.

### DETAILED DESCRIPTION OF THE INVENTION

A first aspect of the invention relates to a composition for preserving or improving the quality of meat products or meat analogues, said composition comprising on a dry matter basis:
(a) between 30 and 80 % (w/w) acid equivalent of lactate and acetate;
(b) between 0.04 and 2.5% (w/w) of anthocyanidin;
wherein lactate and acetate are contained in the composition in a molar ratio of lactic acid equivalent: acetic acid equivalent of 0.5:1 to 1.7:1.

The term "acetate" as used herein, unless indicated otherwise, encompasses acetic acid, salts of acetic acid, dissociated acetate and combinations thereof.

The term "lactate" as used herein, unless indicated otherwise, encompasses lactic acid, salts of lactic acid, dissociated lactate and combinations thereof.

The concentration of acetate expressed as "% (w/w) acid equivalent" refers to the total concentration of acetate assuming that all acetate is present as acetic acid.

The concentration of lactate expressed as "% (w/w) acid equivalent" refers to the total concentration of lactate assuming that all lactate is present as lactic acid.

The term "anthocyanidin" as used herein refers to substances that are represented by the following chemical structure 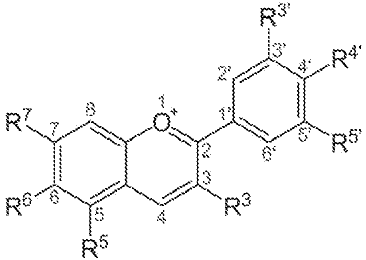 wherein R³, R⁵, R⁶, R⁷, R^{3'}, R^{4'} and R^{5'} are independently selected from H, OH and OCH₃.The term "anthocyanidin" also encompasses glycosides of anthocyanidins ("anthocyanins").

The term "carotenoid" as used herein refers to substances that comprise a polyene chain consisting of 9-11 conjugated double bonds, such as carotenes and xyanthophylls. Examples of carotenoids include the carotenes lycopene, α-carotene, β-carotene, and the following xyantophylls: lutein, zeaxanthin, neoxanthin, violaxanthin, flavoxanthin, and α- and β-cryptoxanthin.

The term "lycopene" as used herein refers to a bright red carotenoid hydrocarbon with the following IUPAC name: (6E,8E,10E,12E,14E,16E,18E,20E,22E,24E,26E)-2,6,10,14,19,23,27,31-octamethyldotriaconta-2,6,8,10,12,14,16,18,20,22,24,26,30-tridecaene.

The term "ascorbate" as used herein, unless indicated otherwise, encompasses ascorbic acid, salts of ascorbic acid, dissociated ascorbate and combinations thereof. The term "ascorbate" further encompasses iso-ascorbic acid (erythorbic acid), salts of iso-ascorbic acid, dissociated iso-ascorbate and combinations thereof.

The concentration of ascorbate expressed as "% w/w acid equivalent" refers to the total concentration of ascorbate assuming that all ascorbate is present as ascorbic acid.

The term "diameter" as used herein in relation to particle, unless indicated otherwise, refers to the average equivalent spherical diameter of said particle.

The anthocyanidin content of compositions can suitably be determined by liquid chromatography - ultra violet (LC-UV). Anthocyanins should be converted to anthocyanidins by means of hydrolysis prior to the analysis.

The carotenoid content of compositions can suitably be determined by high performance liquid chromatography (HPLC), e.g. using a C30 column.

The composition of the present invention can be a powder having a water content of less than 15% (w/w) or an aqueous liquid having a dry matter content of 10 to 80% (w/w).

If the composition is a powder, the acetate is preferably selected from sodium acetate, potassium acetate, calcium acetate, acetic acid and combinations thereof. Similarly, the lactate is preferably selected from sodium lactate, potassium lactate, calcium lactate, lactic acid and combinations thereof.

In a preferred embodiment, the composition is a powder having a water content of less than 15% (w/w); wherein the acetate, if present, is elected from sodium acetate, potassium acetate, calcium acetate, acetic acid and combinations thereof; wherein the lactate, if present, is selected from sodium lactate, potassium lactate, calcium lactate, lactic acid and combinations thereof. More preferably, the water content of the powder is less than 10% (w/w), even more preferably less than 7% (w/w).

According to another preferred embodiment, the composition is an aqueous liquid having a dry matter content of 10 to 80% (w/w). More preferably, the dry matter content of the aqueous liquid is between 20 and 75% (w/w), even more preferably between 30 and 70% (w/w).

In the composition in liquid form, the acetate is preferably selected from acetate (in its dissociated form), acetic acid and combinations thereof. The lactate is preferably selected from lactate (in its dissociated form), lactic acid and combinations thereof.

In a preferred embodiment of the invention, the composition comprises on a dry matter basis between 35 and 75% (w/w), more preferably between 40 and 70% (w/w), acid equivalent of lactate and acetate.

In another preferred embodiment of the invention, the composition comprises lactate and acetate in a molar ratio of lactic acid equivalent: acetic acid equivalent of 0.6:1 to 1.65:1, more preferably of 0.7:1 to 1.6:1 and most preferably of 0.8:1 to 1.55:1.

In a particularly preferred embodiment, the present composition is a powder having a water content of less than 15% (w/w) and the organic acid component comprises 20-60% (w/w) acid equivalent of acetate and 40-75% (w/w) acid equivalent of lactate. Most preferably, the organic acid component comprises 25-55% (w/w) sodium acetate, potassium acetate and combinations thereof and 40-80% (w/w) of lactate selected from sodium lactate, calcium lactate and combinations thereof.

In a preferred embodiment of the invention, the composition, when dispersed into distilled water of 20°C to provide 30 grams of dry matter per L of water, produces an aqueous composition having a pH in the range of 4 to 9, more preferably in the range of 5 to 7.5.

The present composition for preserving or improving the quality of meat products and meat analogues preferably comprises, on a dry matter basis, 0.08 and 1.2 % (w/w), more preferably 0.10 and 0.8 % (w/w) and most preferably 0.12 and 0.5 % (w/w) of anthocyanidins.

According to a particularly preferred embodiment, the present composition comprises, on a dry matter basis, 0.08 and 1.2 % (w/w), more preferably 0.10 and 0.8 % (w/w) and most preferably 0.12 and 0.5 % (w/w) of glycosylated anthocyanidins, i.e. anthocyanins. It was found that, when applied in meat products or meat analogues, anthocyanins tend to more stable than their non-glycosylated counterparts.

According to a particularly preferred embodiment, at least 30 wt.% more preferably at least 50 wt.%, even more preferably at least 70 wt.% of the anthocyanidin is pelargonidin. The color provided by pelargondin to meat products and meat analogues was found to be very similar to that of natural meat.

In a preferred embodiment of the invention the present composition further contains carotenoid. According to a particularly preferred embodiment the carotenoid content of the present composition, on a dry weight basis, lies in the range of 0.1 to 10 mg/kg, more preferably in the range of 0.2 to 8 mg/kg and most preferably in the range of 0.3 to 6 mg/kg.

Preferably, the composition contains, on a dry weight basis, 0.1 to 10 mg/kg, more preferably in the range of 0.2 to 8 mg/kg and most preferably in the range of 0.3 to 6 mg/kg of carotenes selected from lycopene, α-carotene, β-carotene and combinations therefrom.

According to a particularly preferred embodiment, the composition contains, on a dry weight basis, 0.1 to 10 mg/kg, more preferably in the range of 0.2 to 8 mg/kg and most preferably in the range of 0.3 to 6 mg/kg of lycopene.

Anthocyanidins and carotenoid are preferably present in the composition in a weight ratio of anthocyanidins to carotenoid of 300:1 to 6,000:1, more preferably of 500:1 to 3,000:1.

According to another preferred embodiment, the present composition contains, on a dry matter basis, 200-10,000 mg/kg, more preferably 500-5000 mg/kg of complex phenols selected from phenolic diterpenes, polyphenols and combinations thereof.

The concentration of complex phenols in compositions can suitably be determined by high performance liquid chromatography (HPLC), e.g. using aZorbax SB-C18 (50nm x 2.1mm ID x 1.8µm) column.

The composition according to the invention preferably also comprises ascorbate.

Ascorbate is approved as an antioxidant in food products and may be used to e.g. retard color and lipid oxidation and to enhance curing processes. Next to being an antioxidant, it is also known as a vitamin, namely vitamin C. Ascorbate includes iso-ascorbate, which is also known as erythorbate.

If the present composition is a powder, the ascorbate is preferably selected from sodium ascorbate, potassium ascorbate, calcium ascorbate, ascorbic acid and combinations thereof. In the composition in liquid form, the ascorbate is preferably selected from ascorbate (in its dissociated form), ascorbic acid and combinations thereof.

The composition according to the invention preferably comprises on a dry matter basis between 0.5 and 5% w/w acid equivalent of ascorbate, more preferably between 1.0 and 4% w/w acid equivalent of ascorbate, most preferably between 1.2 and 3.5% w/w acid equivalent of ascorbate.

Ascorbate can be produced by means of chemical synthesis, fermentation or a combination of both techniques, but it can also be retrieved from natural sources such as fruit products. Examples of fruit products with a relatively high ascorbate content are acerola, camu camu, seabuckthorn, Indian gooseberry, rose hip, kakadu plum, guava, blackcurrant, orange and lemon. Extracts of these fruits are commercially available as an ascorbate source such as for instance Acerola Cherry 36 from Naturex. In a preferred embodiment of the invention, the ascorbate is provided by a fruit extract. In an even more preferred embodiment, the fruit extract is acerola extract.

The present composition for preserving or improving the quality of meat products and meat analogues can typically be produced by combining various, preferably plant-based, sources of the functional ingredients. A composition in powder form can be obtained by providing the various components in powder form and preparing the composition by means of powder blending. A composition in liquid form can be obtained by providing at least one of the components in liquid form and mixing the other ingredients into the liquid. In a preferred embodiment, the acetate and/or lactate is provided in liquid form. It is also possible to subsequently dry the liquid composition thus obtained, in order to prepare a composition according to the invention in powder form.

Another aspect of the invention relates to a method for the preparation of a composition for preserving or improving the quality of meat products and meat analogues as described herein before, said method comprising the steps of:
- providing a vinegar product containing on a dry weight basis at least 30% (w/w) of acetic acid equivalent, wherein the acetate is selected from sodium acetate, potassium acetate, calcium acetate, acetic acid and combinations thereof;
- providing a lactic acid fermentation product containing on a dry weight basis at least 30 % (w/w) of lactic acid equivalent, wherein the lactate is selected from sodium lactate, potassium lactate, calcium lactate, lactic acid and combinations thereof;
- providing a source of anthocyanidin containing on a dry weight basis at least 0.1 % (w/w) of anthocyanidin;
- mixing the vinegar product, the lactic acid fermentation product and the source of anthocyanidin.

The vinegar product employed in the present method is derived from vinegar, i.e. an aqueous solution of acetic acid that additionally contains small quantities of components that are produced during the production process, e.g. by the fermentation organisms.

Vinegar is preferably obtained by fermentation of a dilute ethanol-containing substrate, preferably using acetic acid bacteria. This ethanol-containing substrate is preferably obtained by yeast fermentation of a vegetal product. The vinegar may be selected from the group consisting of white vinegar, brandy vinegar, alcoholic vinegar, balsamic vinegar, wine vinegar, malt vinegar, beer vinegar, potato vinegar, rice vinegar, apple vinegar, cherry vinegar, and cane vinegar. In a particularly preferred embodiment of the invention, the vinegar is cane vinegar.

In a preferred embodiment of the invention, the vinegar product contains, on a dry weight basis, at least 35% (w/w), more preferably at least 40% (w/w) and most preferably at least 50% (w/w) acid equivalent of acetate.

Neutralized vinegar may be produced by adding an alkalizing agent to vinegar, preferably an alkalizing metal salt, such as a metal carbonate or a metal hydroxide. The metal carbonate is preferably selected from sodium carbonate, sodium bicarbonate and combinations thereof. The metal hydroxide is preferably selected from sodium hydroxide, potassium hydroxide, calcium hydroxide and combinations thereof. Most preferably, the metal hydroxide is sodium hydroxide. The neutralized vinegar may suitably be concentrated by water removal, e.g. by evaporation, and/or dried, e.g. by spray drying.

Preferably, the neutralized vinegar product when diluted with distilled water of 20°C to a dry matter content of 10% (w/w) preferably has a pH of at least 6, more preferably of at least 6.5, even more preferably of at least 6.8, most preferably of at least 7.0.

In accordance with an embodiment of the invention, the vinegar product is provided in the form of a free flowing powder. The production of free flowing powders from liquid vinegars, using conventional drying techniques such as spray drying, has been described in the art. For example, international patent application no. WO/2014/021719 describes processes of producing free flowing powders from alkalized liquid vinegar.

The lactic acid fermentation product employed in the present method is preferably obtained by fermentation of a sugar-containing medium with micro-organisms capable of transforming the sugar into lactic acid. Such micro-organisms are well-known to the person skilled in the art and include lactic acid bacteria. Sugars that can be used generally are C₆ sugars in both monosaccharide and disaccharide form such as glucose, saccharose and lactose. Preferably, saccharose from cane, corn or beet is used. The fermentation can generally be carried out with or without pH control. Without pH control, the pH will decrease with ongoing fermentation due to the production of lactic acid. With pH control, alkalizing agents are added to the fermentation broth in order to maintain the pH at a desired level such as a neutral or near-neutral pH. Alkalizing agents that are typically used are sodium hydroxide, potassium hydroxide, calcium hydroxide etcetera. After fermentation, the lactic acid fermentation product is usually further processed by means of downstream processes such as centrifugation, filtration, membrane filtration, distillation, extraction, evaporation and drying in order to purify and concentrate the product.

In a preferred embodiment of the invention, the lactic acid fermentation product contains, on a dry weight basis, at least 35% (w/w), more preferably at least 40% (w/w) and most preferably at least 50% (w/w) acid equivalent of lactate.

Preferably, the lactic acid fermentation product is a neutralized lactic acid fermentation product that is obtained by means of lactic acid fermentation and addition of an alkalizing agent. Most preferably, the lactic acid fermentation product contains neutralized lactic acid selected from sodium lactate, calcium lactate and combinations thereof.

The neutralized lactic acid fermentation product may suitably be concentrated by water removal, e.g. by evaporation, and/or dried, e.g. by spray drying.

The neutralized lactic acid fermentation product when diluted with distilled water of 20°C to a dry matter content of 10% (w/w) preferably has a pH of at least 6, more preferably of at least 6.5, even more preferably of at least 6.8, most preferably of at least 7.0.

In accordance with an embodiment of the invention, the neutralized lactic acid fermentation product is provided in the form of a free flowing powder. The production of free flowing powders from liquid neutralized lactic acid fermentation products, using conventional drying techniques such as spray drying, has been described in the art. For example, European patent no. EP2879524B1 describes processes of producing free flowing powders from neutralized lactic acid fermentation products containing both sodium and calcium. Additionally, neutralized lactic acid fermentation products in free flowing powder form are commercially available.

According to a particularly preferred embodiment, the present method employs both a neutralized vinegar product and a neutralized lactic acid fermentation

The source of anthocyanidin that is employed in the present method preferably is obtained from one or more plants selected from red radish, berries, grapes, acai, sweet purple potato, apple, pear, red cabbage, carrot and soybean. The source of anthocyanidin may be obtained from these plants by extraction or by drying of plant material. More preferably, the source of anthocyanidin is selected from red radish extract, sweet purple potato extract and combinations thereof. Most preferably, the source of anthocyanidin is red radish extract.

Preferably, the source of anthocyanidin contains, on a dry matter basis, at least 0.3% (w/w), more preferably 0.5-10% (w/w) and most preferably 1.0-8.0% (w/w) of anthocyanidins.

The source of anthocyanidin preferably has a water content of not more than 20% (w/w), more preferably of not more than 15% (w/w)

According to a particularly preferred embodiment, at least 30 wt.% more preferably at least 50 wt.%, even more preferably at least 70 wt.% of the anthocyanidin in the source of anthocyanadin is pelargonidin.

In a preferred embodiment, the present method comprises mixing the vinegar product, the lactic acid fermentation product and the source of anthocyanidin with a source of carotenoid. The source of carotenoid that is used in the present method preferably is obtained from one or more plants selected from tomato, rosehip, wolfberry, berries from buckthorns, annatto, carrot, pumpkins, sweet potato, winter squash, gac fruit. Not only plants, but also from arctic shrimps, microalgae, bacteria and yeast fungus. The source of carotenoid may be obtained from these plants by extraction or by drying of plant material.

The source of carotenoid preferably contains, on a dry matter basis, at least 15 mg/kg, more preferably 20-100 mg/kg and most preferably 25-80 mg/kg of carotenoids.

According to a particularly preferred embodiment, the source of carotenoid is rich in lycopene. Such a lycopene-rich source of carotenoid can be obtained from one or more plants selected from tomato, rosehip, wolfberry, and berries from buckthorns. Most preferably, the lycopene-rich source of carotenoid is selected from tomato extract, tomato powder and combinations thereof.

In a particularly preferred embodiment, the source of carotenoid contains, on a dry matter basis, at least 15 mg/kg, more preferably 20-100 mg/kg and most preferably 25-80 mg/kg of lycopene.

The source of carotenoid preferably has a water content of not more than 20% (w/w), more preferably of not more than 15% (w/w)

In accordance with a preferred embodiment, the present method comprises mixing the vinegar product, the lactic acid fermentation product and the source of anthocyanidin with a source of complex phenols, said source of complex phenols containing on a dry weight basis at least 3% (w/w) of complex phenols selected from phenolic diterpenes, polyphenols and combinations thereof.

The source of complex phenols that is used in the present method preferably is obtained from one or more plants selected from grapes, vanilla, thyme, rosemary, cloves, cranberry, blackberry, raspberry, raisins, mint, onion, grapefruit, apple, kale, leek, tea (black and green), coffee and sage. The source of complex phenols may be obtained from these plants by extraction or by drying of plant material. Most preferably, the source of complex phenols is selected from grape extract and rosemary extract.

The source of complex phenols preferably contains, on a dry matter basis, at least 1% (w/w), more preferably 3-30% (w/w) and most preferably 5-25% (w/w) of complex phenols selected from phenolic diterpenes, polyphenols and combinations thereof.

The source of complex phenols preferably has a water content of not more than 20% (w/w), more preferably of not more than 15% (w/w)

According to another preferred embodiment, the present method comprises the step of providing a fruit extract containing on a dry weight basis at least 10% w/w ascorbate and mixing of mixing this fruit extract with the vinegar product, the lactic acid fermentation product and the source of anthocyanidin. Preferably, the fruit extract is an extract of acerola, camu camu, seabuckthorn, Indian gooseberry, rose hip, kakadu plum, guava, blackcurrant, orange and/or lemon. Most preferably, the fruit extract is acerola extract.

In a preferred embodiment of the invention, the pH of the composition is adjusted to obtain a composition as described herein before. If the pH needs to be increased this is preferably done by adding an appropriate amount of an alkali metal hydroxide. If it is desired to lower the pH of the composition, this may be suitably be done using an appropriate amount of acetic acid and/or lactic acid.

Yet another aspect of the invention relates to a process of preparing a meat product or a meat analogue, said process comprising adding the composition as described herein in an amount that provides between 0.5 and 15% (w/w) of dry matter, calculated by weight of the dry matter that is contained in the final meat product or in the final meat analogue, more preferably in an amount that provides between 1.0 and 10% (w/w) of dry matter, calculated by weight of the dry matter that is contained in the final meat product or in the final meat analogue. Here "% (w/w) dry matter" is calculated by dividing the amount of dry solids provided by the composition by the amount of dry matter that is contained in the final product, multiplied by 100%.

The composition may be applied in liquid or dry form. If it is used in dry form, it may be reconstituted in a suitable quantity of water, e.g. tap water, before adding it to the meat. To this end, the ingredients are typically agitated for a period of time sufficient to form a homogeneous liquid, which may be a dispersion or solution.

The present process of preparing a meat product or a meat analogue preferably comprises adding the composition in an amount that provides 0.5-5% (w/w), more preferably 0.6-4.5% (w/w) and most preferably 0.7-4% (w/w) of lactic acid equivalent, calculated by weight of the final meat product or of the final meat analogue.

In a further preferred embodiment, the process comprises adding the composition in an amount that provides 0.5-5% (w/w), more preferably 0.6-4.5% (w/w) and most preferably 0.7-4% (w/w) of acetic acid equivalent, calculated by weight of the final meat product or of the final meat analogue.

The process according to the present invention is suitable and beneficial for the treatment of most conventional meat products and meat analogues typically offered for human consumption, regardless of the source and/or form in which it is offered.

Preferably, the present process is used prepare a meat product. In a preferred embodiment of the invention, the meat product is processed meat. More preferably, the meat is emulsified meat. Most preferably the meat is selected from sausages, hot dogs, bologna, frankfurter and mortadella.

Preferably, the meat is obtained from beef cattle, pork, lamb, poultry, and game, most preferably from beef cattle, pork, chicken and turkey.

The process for the preparation of processed meat may utilize any method that is known and/or conventionally used for combining fresh meat and an additive composition. For example, meat may be treated with the composition of the invention by dispersing it throughout the fresh meat. Suitable methods include injecting, pumping, spraying, soaking, dipping or otherwise dispersing the composition into or onto the meat. In addition, the method may comprise tumbling, kneading, massaging or otherwise manipulate the meat to further disperse the composition throughout the meat. In some embodiments, the composition is injected under pressure into the meat as part of an automated commercial meat production step. Suitable injectors may be set to pump a particular volume of the composition into each piece of the meat.

In a preferred embodiment of the invention, the process for the preparation of processed meat comprises adding an aqueous liquid containing the present preservation composition, and wherein the composition is added by injection tumbling.

Once the aqueous liquid has been dispersed throughout the meat, the meat may subsequently be cooked until the desired internal temperature is reached, packaged and refrigerated or frozen. Alternatively, once the aqueous liquid has been dispersed throughout the meat, the meat may be packaged, cooked and then refrigerated or frozen.

In a preferred embodiment, the process comprises providing a fresh meat product, preparing a minced meat product thereof and mixing additive compositions into the minced meat product.

In another preferred embodiment the process for the preparation of a processed meat comprises an emulsification step. Examples of emulsified meat products include hotdogs, bologna, frankfurter and mortadella.

The meat product or meat analogue obtainable by the present process typically has advantageous characteristics with respect to moisture retention, color, texture, flavor and shelf life.

The following examples are offered for illustrative purposes.

### EXAMPLES

### Example 1

A stability study of meat samples containing compositions according to the invention was run for 11 weeks at 4°C/39°F. Color of the meat samples was monitored using L*a*b* measurements. Food safety was assessed using *Listeria monocytogenes* and *Clostridium botulinum* models.

Sausages were prepared on the basis of the recipes shows in Table 1.

**Table 1**

| **Ingredients** | **Wt.%** | | | |
|---|---|---|---|---|
| | **1** | **2** | **Ref 1** | **Ref 2** |
| Pork 70% lean muscle/30% fat | 80.00 | 80.00 | 80.00 | 80.00 |
| Salt | 1.80 | 1.80 | | 1.80 |
| Soy protein isolate | 2.00 | 2.00 | 2.00 | 2.00 |
| Potato Starch | 2.00 | 2.00 | 2.00 | 2.00 |
| Dextrose | 0.8 | 0.8 | 0.8 | 0.8 |
| Sodium ascorbate | | | 0.28 | 0.28 |
| Nitrite salt 0.6% | | | 1.8 | |
| Celery ferment powder ¹ | | | | 0.36 |
| Neutralized vinegar powder ² | 0.88 | 0.88 | | |
| Verdad powder N20 ³ | 1.00 | 1.00 | | |
| Red radish powder ⁴ | 0.30 | | | |
| Sweet potato powder ⁵ | | 0.50 | | |
| Water | 11.23 | 11.03 | 13.12 | 12.76 |

| | | | | |
|---|---|---|---|---|
| ¹ ex Draco Natural Products Inc, USA ² Obtained by neutralizing vinegar 300 grain to neutral pH with 50% NaOH, followed by evaporation and spray drying ³ A Na/Ca lactate powder (60/40 w/w) that is prepared by spraying an aqueous sodium lactate solution onto a fluidized bed of calcium lactate powder and dyring ⁴ Red radish juice spray dried onto maltodextrin (ex Plant Lipids). Anthocyanin content is 2 5-3 wt % ⁵ ex Chr. Hansen. Denmark | | | | |

The sausages were prepared by mixing the ground pork (3 mm size) with salt and half of the water (mixture of ice and water) in the meat chopper. The remaining ingredients and the rest of the water were gradually added and mixed until a consistency of emulsified processed meat were reached.

Next, the meat dough so obtained was stuffed into 80 mm casings and cooked until a core temperature of 74°C/165°F was reached. The sausages were cooled down, sliced, packed and stored at 4°C/39°F under light conditions, mimicking grocery store displays.

For all samples the Hunter L*a*b* values were measured, directly after preparation of the sausages and after 11 weeks storage. In addition, water activity, pH and moisture content of the sausages were measured. The results of the measurements are shown in Tables 2 and 3.

**Table 2**

| | ***A_{w}*** | ***pH*** | ***moisture* (% *w*/*w)*** |
|---|---|---|---|
| Reference 1 | 0.973 | 5.96 | 52.37 |
| Reference 2 | 0.976 | 6.11 | 49.33 |
| Product 1 | 0.972 | 5.98 | 51.85 |
| Product 2 | 0.976 | 5.90 | 48.80 |

**Table 3**

| | **0 *weeks*** | | | **7 *weeks*** | | | ***Difference*** | | |
|---|---|---|---|---|---|---|---|---|---|
| | ***L**** | ***a**** | ***b**** | ***L**** | ***a**** | ***b**** | ***ΔL**** | ***Δa**** | ***Δb**** |
| Reference 1 | 68.05 | 13.31 | 9.71 | 70.06 | 10.28 | 10.14 | 17.99 | -3.17 | 0.43 |
| Reference 2 | 66.68 | 13.04 | 10.59 | 69.45 | 8.36 | 11.16 | 2.77 | -1.88 | 0.57 |
| Product 1 | 62.72 | 13.66 | 6.53 | 60.23 | 14.22 | 4.21 | -2.49 | 0.56 | -2.31 |
| Product 2 | 64.06 | 14.16 | 7.71 | 61.81 | 13.52 | 6.25 | -2.25 | -0.64 | -1.46 |

The Lab a* value, representing redness, remained stable over 11 weeks for the sausages according to the invention. The samples containing sodium nitrite or a natural source of nitrite showed a significant reduction in redness.

The data shown in Table 2 were used as input for micro-modelling analysis on food safety. The models used were Meng (Meng et al., 1993) for time to toxin of *C.botulinum* (Gunvig et al., 2013) for the safety period related to C. *botulinum* of both the reference products and the products according to the invention, and the Corbion Listeria Control Model (CLCM, Beekmann et al, presented at the International Congress of Meat Science and Technology, Melbourne 2018) for *L. monocytogenes.*

In order to assess the safety that these products provide, modeling was applied based on the following meat parameters:
- moisture content 60-70%
- pH 6.2-6.4
- A_{w} 0.97
- NaCl 1.8%
- T 4°C or 12°C

It was shown that the test products are able to provide safety towards *L.monocytogenes* for at least 100 days and for *C.botulinum* for 90 days at 4°C/39°F storage and 40 days at 12°C/54°F storage. As compared to Ref 1 and 2, the safety towards *L. monocytogenes* was improved with about 70 days with the products according to the invention. The safety towards *C*. *botulinum* was found to be similar for Ref 1, Ref 2 and the products according to the invention.

The safety provided by the products towards both *L. monocytogenes* and *C*. *botulinum* according to the invention has been investigated for a broader range of lactic acid : acetic acid ratio's. Results are presented in Table 4.

**Table 4**

| | **Lactic acid eq. (% w/w)** | **Acetic acid eq. (%w/w)** | **Molar ratio lactic acid eq. : acetic acid eq.** | **Safety period** |
|---|---|---|---|---|
| 1 | 0.50 | 1.35 | 0.25:1 | <90 days |
| 2 | 0.50 | 0.75 | 0.47:1 | <90 days |
| 3 | 0.80 | 0.75 | 0.73:1 | >90 days |
| 4 | 0.80 | 0.55 | 1.00:1 | >90 days |
| 5 | 1.10 | 0.75 | 1.00:1 | >90 days |
| 6 | 1.10 | 0.55 | 1.33:1 | >90 days |
| 7 | 1.10 | 0.35 | 2.07:1 | <90 days |
| 8 | 1.50 | 0.35 | 2.86:1 | <90 days |

The products were shown to be safe for more than 90 days when the ratio of lactic acid to acetic acid is within the range of 0.5 : 1 to 1.7 : 1. In other cases the safety period was less than 90 days.

### Example 2

Sausages were prepared on the basis of the recipes shows in Table 5.

**Table 5**

| **Ingredients** | **Wt.%** | | | |
|---|---|---|---|---|
| | **A** | **1** | **Control-** | **Control+** |
| Pork 70% lean muscle/30% fat | 80 | 80 | 80 | 80 |
| Salt | 1.8 | 1.8 | 1.8 | |
| Soy protein isolate | 4 | 4 | 4 | 4 |
| Potato Starch | 1 | 1 | 1 | 1 |
| Dextrose | 0.8 | 0.8 | 0.8 | 0.8 |
| Neutralized vinegar powder ¹ | 0.675 | 0.675 | | |
| Verdad powder N20 ² | 1.35 | 1.35 | | |
| Red radish powder ³ | 0.3 | 0.2 | | |
| Tomato powder ⁴ | | 0.1 | | |
| Nitrite salt (0.6% NaNO₂) | | | | 1.8 |
| Ascorbic acid | | | | 0.05 |
| Water | 10.075 | 10.075 | 12.4 | 12.35 |

| | | | | |
|---|---|---|---|---|
| ¹ Obtained by neutralizing vinegar 300 grain to neutral pH with 50% NaOH, followed by evaporation and spray drying ² A Na/Ca lactate powder (60/40 w/w) that is prepared by spraying an aqueous sodium lactate solution onto a fluidized bed of calcium lactate powder and drying ³ Red radish juice spray dried onto maltodextrin (ex Plant lipids). Anthocyanin content is 2.5-3 wt.% ⁴ Spray dried cold break tomato paste. Lycopene content approximately 39 mg/kg | | | | |

The sausages were prepared by mixing the meat and the ingredients until a homogenous mixture was obtained. Next, the meat dough was vacuum stuffed into 80 mm high barrier plastic casings and then cooked in a water bath (set at 75°C) until the internal temperature of 72°C is reached.

After preparation the sausages were vacuum packaged and stored at 0°C for sensory study and 4°C for color stability study.

After 2 weeks of storage at 0°C, all four samples were evaluated by a trained expert panel (n=13). For each of the samples the intensity of 6 different sensory attributes was rated by the panel members on a scale of 1-9 (1 = very weak, 9 = very strong). The attribute scores for the samples were obtained by averaging the scores given by the panel members. The results of the evaluation (average scores) are shown in Table 6.

**Table 6**

| | **Control+** | **A** | **1** |
|---|---|---|---|
| Meat | 4.69 | 5.54 | 4.69 |
| Salt* | 3.69 | 4.31 | 4.69 |
| Sour | 2.62 | 3.15 | 3.46 |
| Sweet | 3.08 | 2.77 | 3.46 |
| Bitter | 2.38 | 2.38 | 2.62 |
| Metallic | 3.69 | 3.31 | 4.23 |

The samples were found to be very similar, except that sample 1 was more salty than the Control+ sample (Dunnett's t = 0,82 (Significance Level p < 0,05).

After 2 weeks of storage at 0°C, sample A and sample 1 were also evaluated by an untrained panel (n=19). This panel scored the overall appearance and color, again on a scale of 1 to 9 (1=very bad and 9=excellent). The results are shown in Table 7.

**Table 7**

| | **A** | **1** |
|---|---|---|
| Appearance | 5.84 | 6.47 |
| Color | 5.79 | 6.58 |

Shortly after preparation and after 1 and 4 weeks of storage at 4°C, the color of some of the samples was analyzed by measuring the L-a-b color values. The results are shown in Tables 8a, 8b and 8c.

**Table 8a**

| | **Control+** | **1** |
|---|---|---|
| L* | 62.63 | 53.37 |
| a* | 15.61 | 12.68 |
| b* | 11.60 | 11.05 |
| ΔE vs Control+ | | **5.19** |

**Table 8b**

| | **Control-** | **Control+** | **1** |
|---|---|---|---|
| L* | 66.92 | 65.76 | 62.73 |
| a* | 8.43 | 16.80 | 10.59 |
| b* | 12.68 | 10.88 | 10.51 |
| ΔE vs Control+ | **8.64** | | **6.93** |

**Table 8c**

| | **Control-** | **Control+** | **1** |
|---|---|---|---|
| L* | 71.75 | 65.84 | 65.17 |
| a* | 3.30 | 16.71 | 9.86 |
| b* | 15.25 | 10.96 | 11.16 |
| ΔE vs Control+ | **15.27** | | **6.89** |

Sample 1 showed a darker pink color than the Control+ sample. Both samples showed enough pinkness/redness to be acceptable by the panels.

After 4 weeks of storage at 4°C in dark condition with MAP packaging, the Control-sample showed unacceptable color degradation, whereas the color of the Control+ sample and sample 1 was still acceptable.

## Claims

1. A composition for use in meat products or meat analogues, said composition comprising on a dry matter basis:
(a) between 30 and 80% (w/w) acid equivalent of lactate and acetate;
(b) between 0.04 and 2.5% (w/w) of anthocyanidin;
wherein lactate and acetate are contained in the composition in a molar ratio of lactic acid equivalent: acetic acid equivalent of 0.5:1 to 1.7:1.

2. Composition according to claim 1, wherein the lactate and acetate are contained in the composition in a ratio of lactic acid equivalent: acetic acid equivalent of 0.6:1 to 1.65:1, preferably of 0.7:1 to 1.6:1.

3. Composition according to claim 1 or 2, wherein the composition contains 0.08-1.2% (w/w) of anthocyanidin.

4. Composition according to any one of the preceding claims, wherein the composition contains 0.1-10 mg/kg of carotenoid.

5. Composition according to claim 4, wherein the composition contains anthocyanidin and carotenoid in a weight ratio of anthocyanidin to carotenoid of 300:1 to 6,000:1.

6. Composition according to claim 4 or 5, wherein the carotenoid is lycopene.

7. Composition according to any one of the preceding claims, wherein the composition contains 200-10,000 mg/kg of complex phenols selected from phenolic diterpenes, polyphenols and combinations thereof.

8. A method for the preparation of a composition according to any one of the preceding claims, comprising:
• providing a vinegar product containing on a dry weight basis at least 30% (w/w) of acetic acid equivalent, wherein the acetate is selected from sodium acetate, potassium acetate, calcium acetate, acetic acid and combinations thereof;
• providing a lactic acid fermentation product containing on a dry weight basis at least 30 % (w/w) of lactic acid equivalent, wherein the lactate is selected from sodium lactate, potassium lactate, calcium lactate, lactic acid and combinations thereof;
• providing a source of anthocyanidin containing on a dry weight basis at least 0.1 % (w/w) of anthocyanidin;
• mixing the vinegar product, the lactic acid fermentation product and the source of anthocyanidin.

9. Method according to claim 8, wherein the vinegar product is a neutralized vinegar product and wherein the lactic acid fermentation product is a neutralized lactic acid fermentation product.

10. Method according to claim 8 or 9, wherein the source of anthocyanidin is obtained from one or more plants selected from red radish, berries, grapes, acai, sweet purple potato, apple, pear, red cabbage, carrot, soybean and combinations thereof.

11. Method according to any one of claims 8-10, wherein the method comprises mixing the vinegar product, the lactic acid fermentation product and the source of anthocyanidins with a source of carotenoids, said source of carotenoids containing on a dry weight basis at least 10 mg/kg of carotenoids

12. Method according to claim 11 wherein the source of carotenoid is obtained from one or more plants selected from tomato, rosehip, wolfberry, berries from buckthorns, annatto, carrot, pumpkins, sweet potato, winter squash and gac fruit.

13. Method according to claim any one of claims 8-12, wherein the method comprises mixing the vinegar product, the lactic acid fermentation product and the source of anthocyanidins with a source of complex phenols, said source of complex phenols containing on a dry weight basis at least 3% (w/w) of complex phenols selected from phenolic diterpenes, polyphenols and combinations thereof.

14. Method according to claim 13, wherein the source of complex phenols is obtained from one or more plants selected from grapes, vanilla, thyme, rosemary, cloves, cranberry, blackberry, raspberry, raisins, mint, onion, grapefruit, apple, kale, leek, tea, coffee and sage.

15. A process of preparing a meat product or a meat analogue, said process comprising adding the composition according to any one of claims 1-8 to meat in an amount of between 0.5 and 15% (w/w) dry matter.

## Patentansprüche

1. Zusammensetzung zur Verwendung in Fleischprodukten oder Fleischanaloga, wobei die Zusammensetzung auf Trockensubstanzbasis umfasst:
(a) zwischen 30 und 80% (w/w) Säureäquivalent von Lactat und Acetat;
(b) zwischen 0,04 und 2,5% (w/w) Anthocyanidin;
wobei Lactat und Acetat in der Zusammensetzung in einem Molverhältnis von Milchsäureäquivalent : Essigsäureäquivalent von 0,5:1 bis 1,7:1 enthalten sind.

2. Zusammensetzung nach Anspruch 1, wobei das Lactat und Acetat in der Zusammensetzung in einem Verhältnis von Milchsäureäquivalent : Essigsäureäquivalent von 0,6:1 bis 1,65:1, bevorzugt von 0,7:1 bis 1,6:1, enthalten sind.

3. Zusammensetzung nach Anspruch 1 oder 2, wobei die Zusammensetzung 0,08-1,2% (w/w) Anthocyanidin enthält.

4. Zusammensetzung nach einem der vorhergehenden Ansprüche, wobei die Zusammensetzung 0,1-10 mg/kg Carotinoid enthält.

5. Zusammensetzung nach Anspruch 4, wobei die Zusammensetzung Anthocyanidin und Carotinoid in einem Gewichtsverhältnis von Anthocyanidin zu Carotinoid von 300:1 bis 6.000:1 enthält.

6. Zusammensetzung nach Anspruch 4 oder 5, wobei das Carotinoid Lycopin ist.

7. Zusammensetzung nach einem der vorhergehenden Ansprüche, wobei die Zusammensetzung 200-10.000 mg/kg komplexe Phenole enthält, die aus phenolischen Diterpenen, Polyphenolen und Kombinationen davon ausgewählt sind.

8. Verfahren zur Herstellung einer Zusammensetzung nach einem der vorangehenden Ansprüche, umfassend:
• Bereitstellen eines Essigprodukts, das auf Trockensubstanzbasis mindestens 30% (w/w) Essigsäureäquivalent enthält, wobei das Acetat ausgewählt ist aus Natriumacetat, Kaliumacetat, Calciumacetat, Essigsäure und Kombinationen davon;
• Bereitstellen eines Milchsäurefermentationsprodukts, das auf Trockensubstanzbasis mindestens 30% (w/w) Milchsäureäquivalent enthält, wobei das Lactat aus Natriumlactat, Kaliumlactat, Calciumlactat, Milchsäure und Kombinationen davon ausgewählt ist;
• Bereitstellen einer Anthocyanidinquelle, die auf Trockensubstanzbasis mindestens 0,1 % (w/w) Anthocyanidin enthält;
• Mischen des Essigprodukts, des Milchsäurefermentationsprodukts und der Anthocyanidinquelle.

9. Verfahren nach Anspruch 8, wobei das Essigprodukt ein neutralisiertes Essigprodukt ist und wobei das Milchsäurefermentationsprodukt ein neutralisiertes Milchsäurefermentationsprodukt ist.

10. Verfahren nach Anspruch 8 oder 9, wobei die Anthocyanidinquelle aus einer oder mehreren Pflanzen ausgewählt aus rotem Rettich, Beeren, Trauben, Acai, violetter Süßkartoffel, Apfel, Birne, Rotkohl, Karotte, Sojabohne und Kombinationen davon gewonnen wird.

11. Verfahren nach einem der Ansprüche 8-10, wobei das Verfahren das Mischen des Essigprodukts, des Milchsäurefermentationsprodukts und der Anthocyanidinquelle mit einer Carotinoidquelle umfasst, wobei die Carotinoidquelle auf Trockensubstanzbasis mindestens 10 mg/kg Carotinoide enthält.

12. Verfahren nach Anspruch 11, wobei die Carotinoidquelle aus einer oder mehreren Pflanzen ausgewählt aus Tomate, Hagebutte, Wolfsbeere, Kreuzdornbeeren, Annatto, Karotte, Kürbis, Süßkartoffel, Winterkürbis und Gac-Frucht gewonnen wird.

13. Verfahren nach einem der Ansprüche 8-12, wobei das Verfahren das Mischen des Essigprodukts, des Milchsäurefermentationsprodukts und der Anthocyanidinquelle mit einer Quelle komplexer Phenole umfasst, wobei die Quelle komplexer Phenole auf Trockensubstanzbasis mindestens 3% (w/w) komplexe Phenole enthält, die aus phenolischen Diterpenen, Polyphenolen und Kombinationen davon ausgewählt sind.

14. Verfahren nach Anspruch 13, wobei die Quelle komplexer Phenole aus einer oder mehreren Pflanzen ausgewählt aus Trauben, Vanille, Thymian, Rosmarin, Nelken, Moosbeeren, Brombeeren, Himbeeren, Rosinen, Minze, Zwiebeln, Grapefruit, Apfel, Grünkohl, Lauch, Tee, Kaffee und Salbei gewonnen wird.

15. Verfahren zur Herstellung eines Fleischprodukts oder eines Fleischanalogons, wobei das Verfahren die Zugabe der Zusammensetzung nach einem der Ansprüche 1-8 zu Fleisch in einer Menge zwischen 0,5 und 15% (w/w) Trockensubstanz umfasst.

## Revendications

1. - Composition destinée à être utilisée dans des produits à base de viande ou des succédanés de viande, ladite composition comprenant sur une base de matière sèche :
(a) entre 30 et 80% (p/p) d'équivalent acide de lactate et d'acétate;
(b) entre 0,04 et 2,5 % (p/p) d'anthocyanidine;
dans laquelle le lactate et l'acétate sont contenus dans la composition dans un rapport molaire équivalent d'acide lactique : équivalent d'acide acétique de 0,5:1 à 1,7:1.

2. - Composition selon la revendication 1, dans laquelle le lactate et l'acétate sont contenus dans la composition dans un rapport équivalent d'acide lactique : équivalent d'acide acétique de 0,6:1 à 1,65:1, de préférence de 0,7:1 à 1,6:1.

3. - Composition selon l'une des revendications 1 ou 2, dans laquelle la composition contient 0,08 à 1,2% (p/p) d'anthocyanidine.

4. - Composition selon l'une quelconque des revendications précédentes, dans laquelle la composition contient 0,1 à 10 mg/kg de caroténoïde.

5. - Composition selon la revendication 4, dans laquelle la composition contient de l'anthocyanidine et du caroténoïde dans un rapport pondéral anthocyanidine/caroténoïde de 300:1 à 6000:1.

6. - Composition selon l'une des revendications 4 ou 5, dans laquelle le caroténoïde est le lycopène.

7. - Composition selon l'une quelconque des revendications précédentes, dans laquelle la composition contient 200-10000 mg/kg de phénols complexes choisis parmi les diterpènes phénoliques, les polyphénols et des combinaisons de ceux-ci.

8. - Procédé de préparation d'une composition selon l'une quelconque des revendications précédentes, comprenant:
- fournir un produit à base de vinaigre contenant, sur une base de poids sec, au moins 30% (p/p) d'équivalent d'acide acétique, dans lequel l'acétate est choisi parmi l'acétate de sodium, l'acétate de potassium, l'acétate de calcium, l'acide acétique et des combinaisons de ceux-ci;
- fournir un produit de fermentation d'acide lactique contenant, sur une base de poids sec, au moins 30% (p/p) d'équivalent d'acide lactique, dans lequel le lactate est choisi parmi le lactate de sodium, le lactate de potassium, le lactate de calcium, l'acide lactique et des combinaisons de ceux-ci;
- fournir une source d'anthocyanidine contenant, sur une base de poids sec, au moins 0,1% (p/p) d'anthocyanidine;
- mélanger le produit à base de vinaigre, le produit de fermentation d'acide lactique et la source d'anthocyanidine.

9. - Procédé selon la revendication 8, dans lequel le produit à base de vinaigre est un produit à base de vinaigre neutralisé et dans lequel le produit de fermentation d'acide lactique est un produit de fermentation d'acide lactique neutralisé.

10. - Procédé selon l'une des revendications 8 ou 9, dans lequel la source d'anthocyanidine est obtenue à partir d'une ou plusieurs plantes choisies parmi le radis rouge, les baies, le raisin, l'açaï, la patate douce violette, la pomme, la poire, le chou rouge, la carotte, le soja et des combinaisons de ceux-ci.

11. - Procédé selon l'une quelconque des revendications 8 à 10, dans lequel le procédé comprend le mélange du produit à base de vinaigre, du produit de fermentation d'acide lactique et de la source d'anthocyanidines avec une source de caroténoïdes, ladite source de caroténoïdes contenant, sur une base de poids sec, au moins 10 mg/kg de caroténoïdes.

12. - Procédé selon la revendication 11, dans lequel la source de caroténoïde est obtenue à partir d'une ou plusieurs plantes choisies parmi la tomate, le cynorrhodon, les baies de goji, les baies d'argousier, le rocou, la carotte, la citrouille, la patate douce, la courge d'hiver et le fruit du gac.

13. - Procédé selon l'une quelconque des revendications 8 à 12, dans lequel le procédé comprend le mélange du produit à base de vinaigre, du produit de fermentation d'acide lactique et de la source d'anthocyanidines avec une source de phénols complexes, ladite source de phénols complexes contenant, sur une base de poids sec, au moins 3% (p/p) de phénols complexes choisis parmi les diterpènes phénoliques, les polyphénols et des combinaisons de ceux-ci.

14. - Procédé selon la revendication 13, dans lequel la source de phénols complexes est obtenue à partir d'une ou plusieurs plantes choisies parmi le raisin, la vanille, le thym, le romarin, le clou de girofle, la canneberge, la mûre, la framboise, les raisins secs, la menthe, l'oignon, le pamplemousse, la pomme, le chou frisé, le poireau, le thé, le café et la sauge.

15. - Procédé de préparation d'un produit à base de viande ou d'un succédané de viande, ledit procédé comprenant ajouter la composition selon l'une quelconque des revendications 1 à 8 à de la viande en une quantité allant entre 0,5 et 15% (p/p) de matière sèche.
